# EUROPEAN PATENT SPECIFICATION

(11) **EP 3 043 521 B1**
(45) Date of publication and mention of the grant of the patent: **06.06.2018**
(21) Application number: 13895496.1
(22) Date of filing: 15.10.2013
(51) Int. Cl.: H04L 12/753, H04L 12/70

(54) **METHOD AND DEVICE FOR SENDING CROSSOVER COMMAND**
VERFAHREN UND VORRICHTUNG ZUM SENDEN VON CROSSOVER-BEFEHLEN
PROCÉDÉ ET DISPOSITIF D'ENVOI DE COMMANDE DE FRANCHISSEMENT

(43) Date of publication of application: 13.07.2016
(73) Proprietor: Huawei Technologies Co., Ltd., Longgang District Shenzhen, Guangdong 518129 (CN)
(72) Inventor: SUN, Jun, Shenzhen Guangdong 518129 (CN)
(74) Representative: Gill Jennings & Every LLP
(86) International application number: PCT/CN2013/085243
(87) International publication number: WO 2015/054826

(56) References cited:
- WO-A1-2011/134266
- CN-A- 101 702 686
- CN-A- 103 117 925
- US-A- 5 809 286
- US-A1- 2003 058 835
- US-A1- 2012 198 350

## Description

### TECHNICAL FIELD

The present invention relates to the communications field, and in particular, to a method and an apparatus for sending a cross-connection command.

### BACKGROUND

Control panels in SDN (Software-Defined Networking) are integrated in an independent controller (a centralized controller) outside a network. A rerouting process in the SDN is: when nodes at two ends of a link on an LSP (Label Switched Path) working path detect that a fault occurs in the link, the nodes send a fault notification message to the centralized controller; the centralized controller calculates a recovery path (which may also be referred to as a rerouting path) for the LSP according to the fault notification message, and sends cross-connection commands to all nodes on the recovery path; and when all the nodes on the recovery path receive the cross-connection commands, and establish local cross-connections according to the cross-connection commands, establishment of the recovery path is completed.

A total time for sending the cross-connection commands (which is a time used from a moment at which the centralized controller starts sending the cross-connection commands to a moment at which all the nodes on the recovery path receive the cross-connection commands) is related to an order in which the centralized controller sends the cross-connection commands. It is assumed that a transmission delay of a message packet between two nodes is one unit time, and a forward delay that a node forwards the message packet is ignored. Generally, when the recovery path has a hop count of q, the total time for sending the cross-connection commands is between q+1 unit times and 2q+1 unit times.

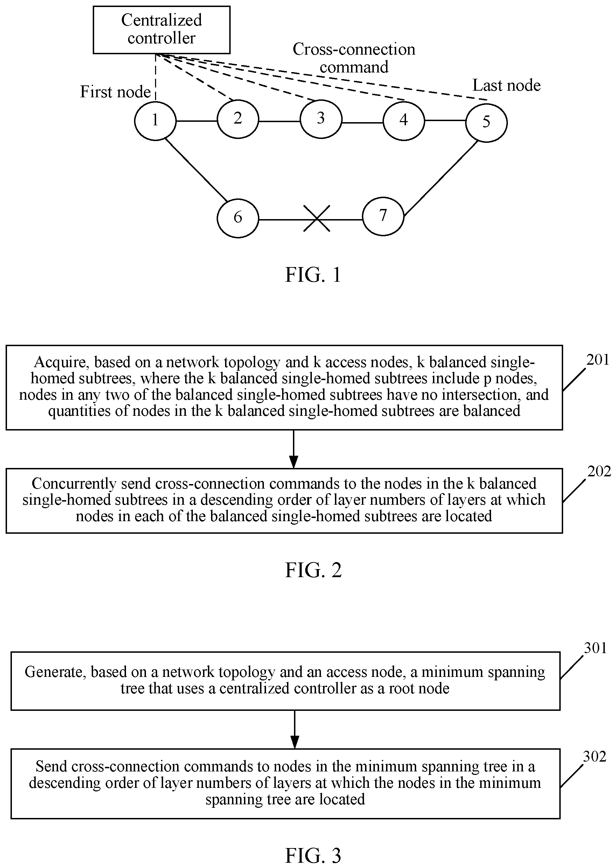

For example, referring to FIG. 1, an LSP working path is: a node 1 to a node 6 to a node 7 to a node 5. When a fault occurs in a link between the node 6 and the node 7, an obtained recovery path is: the node 1 to a node 2 to a node 3 to a node 4 to the node 5. If cross-connection commands are sent in a sequence of "the node 1, the node 2, the node 3, the node 4, and the node 5", a total time for sending the cross-connection commands is nine unit times; or if the cross-connection commands are sent in a sequence of "the node 5, the node 4, the node 3, the node 2, and the node 1", a total time for sending the cross-connection commands is five unit times.

At present, a centralized controller generally sends cross-connection commands in a random order, but the random order causes a total time for sending the cross-connection commands to be uncontrollable, and the total time cannot be minimized.

US 5,809,286 relates to method and apparatus for emulating a dynamically configured digital cross-connect switch network.

### SUMMARY

Embodiments of the present invention provide a method and an apparatus for sending a cross-connection command, which can automatically control a total time for sending cross-connection commands, and achieve time optimization.

In particular, the present disclosure provides a method according to claim 1 and an apparatus according to claim 5. The remaining technical features of each of these aspects are defined in the respective dependent claims.

According to the method and apparatus for sending a cross-connection command provided in the embodiments of the present invention, a fixed order in which cross-connection commands are sent is provided; therefore, a total time for sending the cross-connection commands can be automatically controlled. In addition, in the solutions, splitting of a network into k balanced single-homed subtrees by a centralized controller, a concurrent sending manner, and a setting of the fixed order enable the total time for sending the cross-connection commands to be minimized; or generating, based on a network topology, a minimum spanning tree that uses a centralized controller as a root node, and a setting of the fixed order enable the total time for sending the cross-connection commands to be minimized. Therefore, a problem in the prior art that a total time for sending cross-connection commands is uncontrollable due to a random order, and the total time cannot be minimized is resolved.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and persons of ordinary skill in the art may still derive other drawings from these accompanying drawings without creative efforts.
FIG. 1 is a schematic diagram of a method for sending a cross-connection command in the prior art;
FIG. 2 is a flowchart of a method for sending a cross-connection command according to Embodiment 1;
FIG. 3 is a flowchart of a method for sending a cross-connection command according to Embodiment 2;
FIG. 4 is a schematic diagram of a single-homed access scenario according to Embodiment 2;
FIG. 5 is a schematic diagram of a minimum spanning tree that uses a centralized controller as a root node and that is generated based on FIG. 4;
FIG. 6A and FIG. 6B are a flowchart of a method for sending a cross-connection command according to Embodiment 3;
FIG. 7 is a schematic diagram of a dual-homed access scenario according to Embodiment 1;
FIG. 8 is a schematic diagram of an initial single-homed subtree generated based on FIG. 7;
FIG. 9(a) is a schematic diagram of a process of generating a balanced single-homed subtree based on FIG. 8;
FIG. 9(b) is a schematic diagram of a process of generating a balanced single-homed subtree based on FIG. 9(a);
FIG. 9(c) is a schematic diagram of a process of generating a balanced single-homed subtree based on FIG. 9(b);
FIG. 9(d) is a schematic diagram of a balanced single-homed subtree generated based on FIG. 9(c);
FIG. 10 is a schematic diagram of a multi-homed access scenario according to Embodiment 2;
FIG. 11 is a schematic diagram of an initial single-homed subtree generated based on FIG. 10;
FIG. 12 is a schematic diagram of a balanced single-homed subtree generated based on FIG. 11;
FIG. 13 is a structural diagram of an apparatus for sending a cross-connection command according to Embodiment 4;
FIG. 14 is a structural diagram of another apparatus for sending a cross-connection command according to Embodiment 4;
FIG. 15 is a structural diagram of an apparatus for sending a cross-connection command according to Embodiment 5;
FIG. 16 is a structural diagram of an apparatus for sending a cross-connection command according to Embodiment 6; and
FIG. 17 is a structural diagram of an apparatus for sending a cross-connection command according to Embodiment 7.

### DESCRIPTION OF EMBODIMENTS

The following clearly describes the technical solutions in the embodiments of the present invention with reference to the accompanying drawings in the embodiments of the present invention. Apparently, the described embodiments are merely some rather than all of the embodiments of the present invention. All other embodiments obtained by persons of ordinary skill in the art based on the embodiments of the present invention without creative efforts shall fall within the protection scope of the present invention.

### Embodiment 1

Refer to FIG. 2, which shows a method for sending a cross-connection command according to this embodiment of the present invention, and the method is applied to a centralized controller, where a network includes p nodes; the centralized controller is connected to the network by using k access nodes of the p nodes, where p≥k≥2, and both k and p are integers; and the method includes:

201: Acquire, based on a network topology and the k access nodes, k balanced single-homed subtrees, where the k balanced single-homed subtrees include the p nodes, nodes in any two of the balanced single-homed subtrees have no intersection, and quantities of nodes in the k balanced single-homed subtrees are balanced.

This solution may be applied to SDN.

In this embodiment, k≥2, that is, the centralized controller is connected to the network by using at least two (access) nodes. Generally, a scenario in which a centralized controller is connected to a network by using two (access) nodes is referred to as a dual-homed access scenario; and a scenario in which a centralized controller is connected to a network by using more than two (access) nodes is referred to as a multi-homed access scenario. This solution may be executed by the centralized controller.

The network topology includes the p nodes in the network and a connection relationship between the p nodes.

That the nodes in any two of the balanced single-homed subtrees have no intersection indicates that: if a node of the p nodes is in a balanced single-homed subtree, the node does not exist in other k-1 balanced single-homed subtrees except the balanced single-homed subtree.

That the quantities of nodes in the k balanced single-homed subtrees are balanced indicates that quantities of nodes in any two single-homed subtrees of the k balanced single-homed subtrees are as equal as possible, where a difference between the quantities of the nodes in any two of the single-homed subtrees≤k-1. For example, if p=8, and k=2, each balanced single-homed subtree of the k balanced single-homed subtrees may separately include four nodes, and so on. For another example, if p=16, and k=3, the k balanced single-homed subtrees may separately include six nodes, five nodes, and five nodes, or may separately include six nodes, six nodes, and four nodes, and so on.

202: Concurrently send cross-connection commands to the nodes in the k balanced single-homed subtrees in a descending order of layer numbers of layers at which nodes in each of the balanced single-homed subtrees are located.

Exemplarily, in specific implementation, step 202 may be: sending the cross-connection commands to the nodes in the k balanced single-homed subtrees by using k processes, where each process corresponds to one of the balanced single-homed subtrees, and in each process, cross-connection commands are sent, to nodes in the balanced single-homed subtree that corresponds to the process, in a descending order of layer numbers of layers at which the nodes in the balanced single-homed subtree are located. Herein, the "process" may be also referred to as a thread.

Optionally, step 201 may include:
1) removing, for each of the access nodes, k-1 links between the centralized controller and k-1 access nodes except the access node, to obtain k different single-homed network topologies;
2) generating, based on the k single-homed network topologies, k initial single-homed subtrees, where the k initial single-homed subtrees are k minimum spanning trees that use the centralized controller as a root node;
3) determining p×(k-1) operational nodes in the k initial single-homed subtrees; and
4) removing the p×(k-1) operational nodes, to obtain the k balanced single-homed subtrees.

Exemplarily, in step 1), the centralized controller may sequentially or simultaneously remove, for each access node, the k-1 links between the centralized controller and the k-1 access nodes except the access node, to obtain the k different single-homed network topologies.

Each single-homed network topology includes the p nodes, and the k initial single-homed subtrees include p×k nodes in total.

In step 2), each single-homed network topology generates one initial single-homed subtree, and in the process, a quantity of nodes remains unchanged. That is, each initial single-homed subtree includes the p nodes, and the k initial single-homed subtrees include p×k nodes in total.

A feature of the minimum spanning tree that uses the centralized controller as a root node is: a hop count or a cost from the centralized controller to any node in the tree is the smallest. The centralized controller may obtain, by using any method in the prior art, the minimum spanning tree (that is, the initial single-homed subtree) that uses the centralized controller as a root node.

In step 4), the k initial single-homed subtrees include p×k nodes in total, and it is learned according to step 201 that the k balanced single-homed subtrees include p nodes in total; therefore, the k initial single-homed subtrees include p×(k-1) operational nodes in total.

It should be noted that in specific implementation, the centralized controller may implement step 3) and step 4) in the following two manners, which is not limited thereto:

Manner 1: First perform step 3) and then perform step 4), that is, first acquire the p×(k-1) operational nodes, and then remove the p×(k-1) operational nodes.

Manner 2: Execute a cyclic process for p×(k-1) times, where in each cyclic process, one operational node is acquired and the operational node is removed.

Optionally, step 3) and step 4) may include: determining an execution object on which a current removal operation is executed, and removing the execution object, where the execution object is one of the p×(k-1) operational nodes. It should be noted that the optional manner is the cyclic process in the foregoing manner 2.

The determining an execution object on which a current removal operation is executed may include:
A) determining, in k current single-homed subtrees, a subtree on which the current removal operation is executed, where the current single-homed subtree refers to a subtree in a current network topology, the current network topology refers to a network topology obtained after a previous removal operation is executed, and the subtree on which the current removal operation is executed includes a node that exists in other k-1 current single-homed subtrees; and
B) using one node, existing in the other k-1 current single-homed subtrees, in the subtree on which the current removal operation is executed as the execution object.

Exemplarily, the execution of a current removal operation may include: any one time of execution of the removal operation from the first time of execution of the removal operation to the (p×(k-1))^{th} time of execution of the removal operation. The first time the removal operation is executed, the k current single-homed subtrees are the k initial single-homed subtrees; and the j^{th} time the removal operation is executed, the k current single-homed subtrees are k single-homed subtrees obtained after the (j-1)^{th} time the removal operation is executed, where 1<j≤p×(k-1), and j is an integer.

Further, optionally, step A) may include:
determining first-type subtrees in the k current single-homed subtrees, where the first-type subtree is a current single-homed subtree that includes a node in the other k-1 current single-homed subtrees; and
when there is one current single-homed subtree whose quantity of nodes is the greatest in the first-type subtrees, using the current single-homed subtree whose quantity of nodes is the greatest in the first-type subtrees as the subtree on which the current removal operation is executed; or
when there are at least two current single-homed subtrees whose quantities of nodes are the greatest in the first-type subtrees, using a current single-homed subtree whose quantity of nodes is the greatest and whose quantity of layers is the greatest in the first-type subtrees as the subtree on which the current removal operation is executed.

Exemplarily, when there are at least two current single-homed subtrees whose quantities of nodes are the greatest and whose quantities of layers are the greatest in the first-type subtrees, the centralized controller may select any one of the at least two current single-homed subtrees as the subtree on which the current removal operation is executed.

It should be noted that a specific manner of determining the first-type subtrees is not limited in this embodiment of the present invention. For example, in a specific implementation, the first-type subtrees may be determined, in the k current single-homed subtrees, in a descending order of quantities of nodes included in the current single-homed subtrees. For details, reference may be made to Embodiment 2.

Further, optionally, step B) may include:
when there are at least two nodes, existing in the other k-1 current single-homed subtrees, in the subtree on which the current removal operation is executed, using a node that is located at a layer whose layer number is the smallest in the at least two nodes as the execution object.

Exemplarily, when there are at least two nodes that are located at layers whose layer numbers are the smallest in the at least two nodes, the centralized controller may select any one of the at least two nodes as the execution object.

It should be noted that each balanced single-homed subtree corresponds to one tree sending time, and a total time for sending the cross-connection commands is a tree sending time that is the greatest in k tree sending times that correspond to the k balanced single-homed subtrees. The tree sending time refers to a time used from a moment at which the centralized controller starts sending the cross-connection commands to a moment at which all nodes in the tree (the balanced single-homed subtree) receive the cross-connection commands.

Each layer corresponds to one layer sending time. Assuming that a balanced single-homed subtree includes m layers, where m≥1, and m is an integer, a tree sending time corresponding to the balanced single-homed subtree is a layer sending time that is the greatest in m layer sending times that correspond to the m layers. The layer sending time refers to a time used from the moment at which the centralized controller starts sending the cross-connection commands to a moment at which all nodes at the layer receive the cross-connection commands.

According to the method for sending a cross-connection command provided in this embodiment of the present invention, k balanced single-homed subtrees are acquired based on a network topology and k access nodes, where k≥2; and cross-connection commands are concurrently sent to nodes in the k balanced single-homed subtrees in a descending order of layer numbers of layers at which nodes in each of the balanced single-homed subtrees are located. A fixed order (which, in each process, is a descending order of layer numbers of layers at which nodes in a balanced single-homed subtree that corresponds to the process are located) in which cross-connection commands are sent is provided in this solution; therefore, a total time for sending the cross-connection commands can be automatically controlled. In addition, in this solution, splitting of a network into k balanced single-homed subtrees by a centralized controller, a concurrent sending manner, and a setting of the fixed order enable the total time for sending the cross-connection commands to be minimized. Therefore, a problem in the prior art that a total time for sending cross-connection commands is uncontrollable due to a random order, and the total time cannot be minimized is resolved.

### Embodiment 2

Refer to FIG. 3, which shows a method for sending a cross-connection command according to this embodiment of the present invention, and the method is applied to a centralized controller, where a network includes p nodes; the centralized controller is connected to the network by using one access node of the p nodes, where p is an integer greater than or equal to 1; and the method includes:
301: Generate, based on a network topology and an access node, a minimum spanning tree that uses a centralized controller as a root node.

This solution may be applied to SDN. An SDN architecture may include: one centralized controller and p nodes, where the p nodes constitute a network, and the centralized controller is connected to the network by using k access nodes of the p nodes. In this embodiment, k=1, that is, the centralized controller is connected the network by using only one (access) node. Generally, this scenario is referred to as a single-homed access scenario. This solution may be executed by the centralized controller.

The network topology includes the p nodes in the network and a connection relationship between the p nodes.

A feature of the minimum spanning tree that uses the centralized controller as a root node is: a hop count or a cost from the centralized controller to any node in the tree is the smallest. The centralized controller may obtain, by using any method in the prior art, the minimum spanning tree that uses the centralized controller as a root node. The minimum spanning tree includes the p nodes.

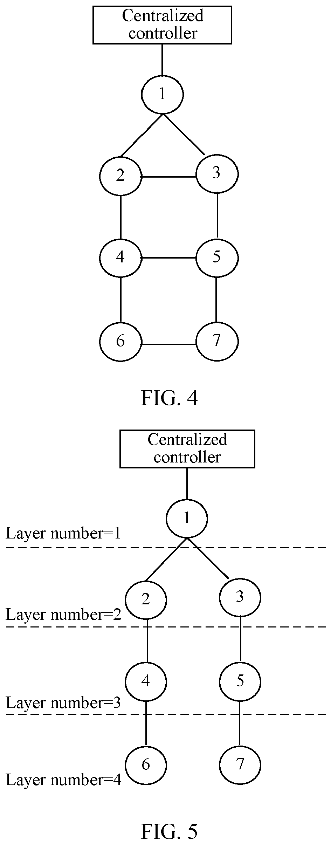

Refer to FIG. 4, which is a schematic diagram of a single-homed access scenario, where a centralized controller and a network topology are included. Refer to FIG. 5, which shows a minimum spanning tree that uses a centralized controller as a root node and that is generated based on the network topology shown in FIG. 4, where the minimum spanning tree includes m layers in total.

302: Send cross-connection commands to nodes in the minimum spanning tree in a descending order of layer numbers of layers at which the nodes in the minimum spanning tree are located.

It should be noted that each layer corresponds to one layer sending time. Assuming that the minimum spanning tree includes m layers, where m is an integer greater than or equal to 1, a total time for sending the cross-connection commands is a layer sending time that is the greatest in m layer sending times that correspond to the m layers. The layer sending time refers to a time used from a moment at which the centralized controller starts sending the cross-connection commands to a moment at which all nodes at the layer receive the cross-connection commands.

The layer sending time corresponding to each layer in the minimum spanning tree is described below:
It is assumed that a transmission delay of a message packet between two nodes is one unit time, a forward delay that a node forwards the message packet is ignored, and a quantity of nodes included at the i^{th} layer of the minimum spanning tree is represented as n(i), a layer sending time of a node at the m^{th} layer is represented as t(m), and a total time for sending the cross-connection commands is represented as t, where n(1)=1.

If the cross-connection commands are sent in the order in step 302,
the layer sending time of the node at the m^{th} layer is: t(m)=m+n(m)-1;
a layer sending time at a node of the (m-1)^{th} layer is: t(m-1)=t(m)+n(m-1)-1=m+n(m)+n(m-1)-2;
a layer sending time of a node at the (m-2)^{th} layer is: t(m-2)=t(m-1)+n(m-2)-1=m-3+n(m)+n(m-1)+n(m-2);
... and
a layer sending time of a node at the first layer is: t(1)=n(m)+n(m-1)+...+n(2)+n(1).

The total time for sending the cross-connection commands is: t=MAX(t(1), t(2), ..., and t(m)), where the function MAX( ) represents calculation of a maximum value in input parameters. In this embodiment, the total time for sending the cross-connection commands is a tree sending time.

As can be learned from the formula of the total time for sending the cross-connection commands:
1) the total time for sending the cross-connection commands increases as a total quantity of nodes in a tree increases; and
2) the total time for sending the cross-connection commands increases as a quantity of layers of a tree increases.

According to the method for sending a cross-connection command provided in this embodiment of the present invention, a minimum spanning tree that uses a centralized controller as a root node is generated based on a network topology; and cross-connection commands are sent to nodes in the minimum spanning tree in a descending order of layer numbers of layers at which the nodes in the minimum spanning tree are located. A fixed order (where the cross-connection commands are sent to the nodes in the minimum spanning tree in the descending order of the layer numbers of the layers at which the nodes in the minimum spanning tree are located) in which cross-connection commands are sent is provided in this solution; therefore, a total time for sending the cross-connection commands can be automatically controlled. In addition, generating, based on the network topology, the minimum spanning tree that uses the centralized controller as a root node, and a setting of the fixed order enable the total time for sending the cross-connection commands to be minimized. Therefore, a problem in the prior art that a total time for sending cross-connection commands is uncontrollable due to a random order, and the total time cannot be minimized is resolved.

### Embodiment 3

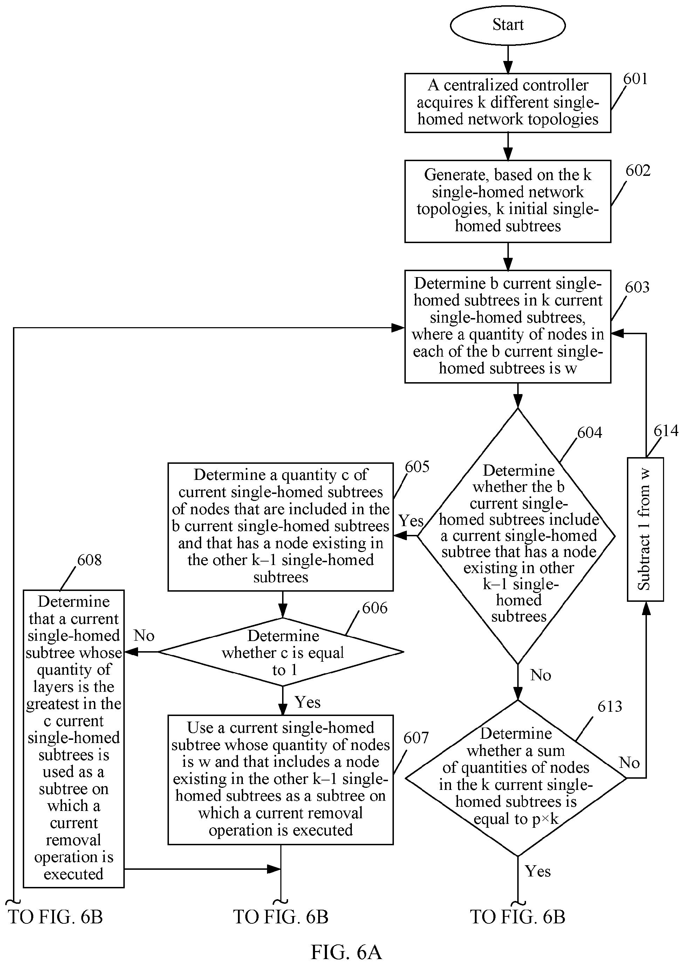

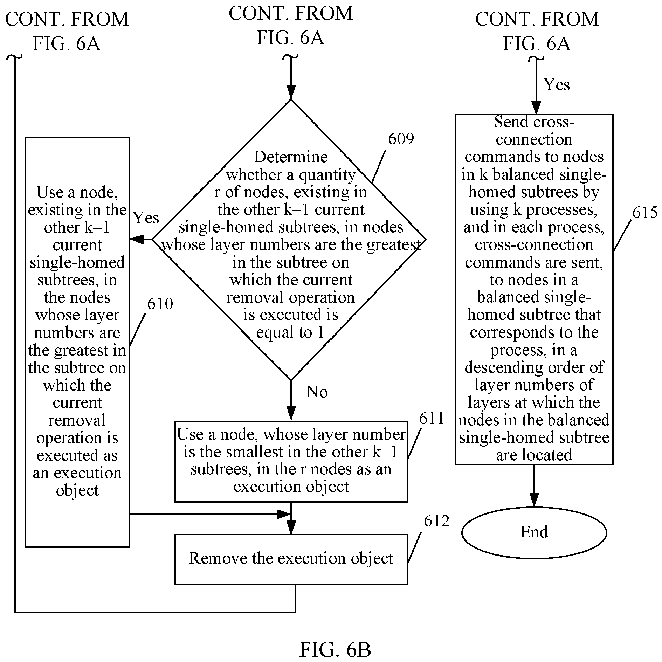

Refer to FIG. 6A and FIG. 6B, which shows a method for sending a cross-connection command according to this embodiment of the present invention, and the method is applied to a centralized controller, where a network includes p nodes; the centralized controller is connected to the network by using k access nodes of the p nodes, where p=8, and k=2; and the method includes:
601: A centralized controller removes, for each access node, k-1 links between the centralized controller and k-1 access nodes except the access node, to obtain k different single-homed network topologies.
602: Generate, based on the k single-homed network topologies, k initial single-homed subtrees, where the k initial single-homed subtrees are k minimum spanning trees that use the centralized controller as a root node.

Step 603 to step 613 below are a process of generating k balanced single-homed subtrees by using the k initial single-homed subtrees. Step 603 to step 610 are a process of determining a subtree on which a current removal operation is executed. Step 601 to step 613 is a process of determining an execution object on which the current removal operation is executed.

603: Determine b current single-homed subtrees in k current single-homed subtrees, where a quantity of nodes in each of the b current single-homed subtrees is w.

w is a quantity of nodes of a current single-homed subtree whose quantity of nodes is the greatest in the k current single-homed subtrees, and b is a quantity of current single-homed subtrees, where a quantity of nodes in each of the b current single-homed subtrees is w, where b≥1, and b is an integer.

The first time that step 603 is performed, the k current single-homed subtrees are specifically the k initial single-homed subtrees.

604: Determine whether the b current single-homed subtrees include a current single-homed subtree that has a node existing in other k-1 single-homed subtrees.

If the b current single-homed subtrees includes a current single-homed subtree that has a node existing in other k-1 single-homed subtrees, perform step 605; or if the b current single-homed subtrees does not include a current single-homed subtree that has a node existing in other k-1 single-homed subtrees, perform step 609.

Exemplarily, when b=1, step 604 may be specifically: determining whether the b current single-homed subtrees include a node existing in the other k-1 single-homed subtrees. For example, the k current single-homed subtrees are a subtree 1, a subtree 2, and a subtree 3, and when the b current single-homed subtrees are the subtree 1, it is determined whether the subtree 1 includes a node existing in the subtree 2 and the subtree 3.

When b≥2, step 604 may be specifically: separately determining whether the b current single-homed subtrees include a node existing in the other k-1 single-homed subtrees. For example, the k current single-homed subtrees are a subtree 1, a subtree 2, and a subtree 3, and the b current single-homed subtrees are the subtree 1 and the subtree 2. Step 604 is specifically: separately determining whether the subtree 1 includes a node existing in the subtree 2 and the subtree 3, and whether the subtree 2 includes a node existing in the subtree 1 and the subtree 3. In this case, when any current single-homed subtree of the b current single-homed subtrees includes a node existing in the other k-1 single-homed subtree, a determining result is yes.

It should be noted that when any subtree of the k current single-homed subtrees includes a node existing in the other k-1 single-homed subtree, it indicates that there is an operational node (the execution object).

605: Determine a quantity c of current single-homed subtrees that are included in the b current single-homed subtrees and that has a node existing in the other k-1 single-homed subtrees.

c≥1, and c is an integer.

606: Determine whether c is equal to 1.

If c is equal to 1, perform step 607; or if c is not equal to 1, perform step 608.

607: Use a current single-homed subtree whose quantity of nodes is w and that includes a node existing in the other k-1 single-homed subtrees as a subtree on which a current removal operation is executed.

Perform step 609 after step 607.

608: Determine that a current single-homed subtree whose quantity of layers is the greatest in the c current single-homed subtrees is used as a subtree on which a current removal operation is executed.

Exemplarily, when there are at least two current single-homed subtrees whose quantities of layers are the greatest in the c current single-homed subtrees, the centralized controller may select any one of the at least two current single-homed subtrees as the subtree on which the current removal operation is executed.

Perform step 609 after step 608.

609: Determine whether a quantity r of nodes, existing in the other k-1 current single-homed subtrees, in nodes whose layer numbers are the greatest in the subtree on which the current removal operation is executed is equal to 1.

If r is equal to 1, perform step 610; or if r is not equal to 1, perform step 611.

610: Use a node, existing in the other k-1 current single-homed subtrees, in the nodes whose layer numbers are the greatest in the subtree on which the current removal operation is executed as an execution object.

Perform step 612 after step 610.

611: Use a node, whose layer number is the smallest in the other k-1 subtrees, in the r nodes as the execution object.

The r nodes are nodes, existing in the other k-1 current single-homed subtrees, in the nodes whose layer numbers are the greatest in the subtree on which the current removal operation is executed.

Exemplarily, if in the r nodes, there are at least two nodes, whose layer numbers are the smallest in the other k-1 subtrees, any one of the at least two nodes is selected as the execution object.

612: Remove the execution object.

Go back to step 603 after step 612.

613: Determine whether a sum of quantities of nodes in the k current single-homed subtrees is equal to p×k.

If the sum of the quantities of the nodes in the k current single-homed subtrees is equal to (p×k), perform step 615; or if the sum of the quantities of the nodes in the k current single-homed subtrees is not equal to (p×k), perform step 614.

Exemplarily, when a determining result is yes, it indicates that no operational node (the execution object) exists, that is, the k current single-homed subtrees are the k balanced single-homed subtrees; otherwise, it indicates that an operational node (the execution object) exists, that is, the k current single-homed subtrees are not the k balanced single-homed subtrees.

It should be noted that step 613 may be further: determining whether the k current single-homed subtrees include any manner of the operational node.

614: Subtract 1 from w.

Go back to step 603 after performing step 614.

615: Send cross-connection commands to nodes in k balanced single-homed subtrees by using k processes, where each process corresponds to one balanced single-homed subtree, and in each process, cross-connection commands are sent, to nodes in the balanced single-homed subtree that corresponds to the process, in a descending order of layer numbers of layers at which the nodes in the balanced single-homed subtree are located.

According to the method for sending a cross-connection command provided in this embodiment of the present invention, k balanced single-homed subtrees are acquired based on a network topology and k access nodes, where k≥2; and cross-connection commands are concurrently sent by using k processes, where each process corresponds to one balanced single-homed subtree, and in each process, cross-connection commands are sent, to nodes in a balanced single-homed subtree that corresponds to the process, in a descending order of layer numbers of layers at which the nodes in the balanced single-homed subtree are located. A fixed order (which, in each process, is a descending order of layer numbers of layers at which nodes in a balanced single-homed subtree that corresponds to the process are located) in which cross-connection commands are sent is provided in this solution; therefore, a total time for sending the cross-connection commands can be automatically controlled. In addition, in this solution, splitting of a network into k balanced single-homed subtrees by a centralized controller, a concurrent sending manner, and a setting of the fixed order enable the total time for sending the cross-connection commands to be minimized. Therefore, a problem in the prior art that a total time for sending cross-connection commands is uncontrollable due to a random order, and the total time cannot be minimized is resolved.

Embodiment 3 is described below by using specific examples.

### Embodiment 1

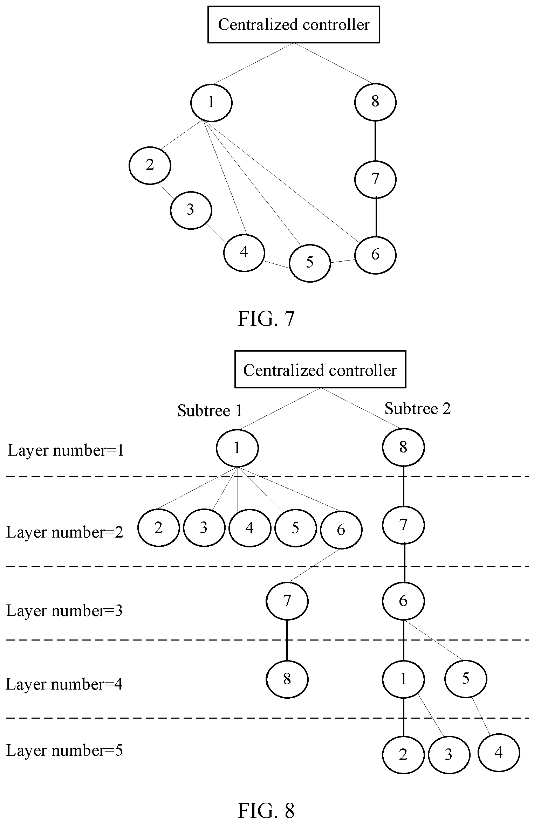

Refer to FIG. 7, which is a schematic diagram of a dual-homed access scenario according to this embodiment of the present invention, where a centralized controller and eight nodes are included in the scenario. The eight nodes are separately represented as: a node 1, a node 2, a node 3..., and a node 8. The centralized controller is connected to the node 1, the node 8, and a network, that is, the node 1 and the node 8 are access nodes.

In this case, step 601 is specifically: removing, by the centralized controller, a link between the centralized controller and the node 8, to obtain a single-homed network topology 1; and removing a link between the centralized controller and the node 2, to obtain a single-homed network topology 2.

Step 602 is specifically: generating, based on the single-homed network topology 1 and the single-homed network topology 2, two minimum spanning trees, that is, two initial single-homed subtrees, which are separately marked as a subtree 1 and a subtree 2, shown in FIG. 8.

For example, specific processes of performing step 603 to step 613 at the first time and the second time are as follows:
The first time step 603 to step 613 are performed, w=8. b current single-homed subtrees determined in step 603 are the subtree 1 and the subtree 2, where a quantity of nodes in each of the b current single-homed subtrees is 8. A determining result of step 604 is: the subtree 1 includes nodes existing in the subtree 2, and the subtree 2 includes nodes existing in the subtree 1. It is determined in step 605 that c=2. Therefore, a determining result of step 606 is no, and a subtree on which a current removal operation is executed needs to be determined by performing step 608. The determined subtree on which the current removal operation is executed is the subtree 2.

Because there are three nodes, existing in other k-1 current single-homed subtrees, in nodes whose layer numbers are the greatest in the subtree (the subtree 2) on which the current removal operation is executed, where the three nodes are separately: a node 2, a node 3, and a node 4, an execution object needs to be determined by performing step 613. Specifically, because there are three nodes, whose layer numbers are the smallest, in the other k-1 subtrees, where the three nodes are separately the node 2, the node 3, and the node 4, any one of the three nodes may be selected as the execution object. In this embodiment, the node 2 is selected as the execution object.

The second time step 603 to step 613 are performed, w=8. b current single-homed subtrees determined in step 603 is the subtree 1, where a quantity of nodes in each of the b current single-homed subtrees is 8. A determining result of step 604 is yes, and the specific determining result is: the subtree 1 includes nodes existing in the subtree 2. It is determined in step 605 that c=1. Therefore, a determining result of step 606 is yes, and a subtree on which a current removal operation is executed needs to be determined by performing step 607. The determined subtree on which the current removal operation is executed is the subtree 1.

Because there is one node, existing in the other k-1 current single-homed subtrees, in nodes whose layer numbers are the greatest in the subtree (the subtree 1) on which the current removal operation is executed, where the node is a node 8, an execution object needs to be determined by performing step 612. The determined execution object is the node 8.

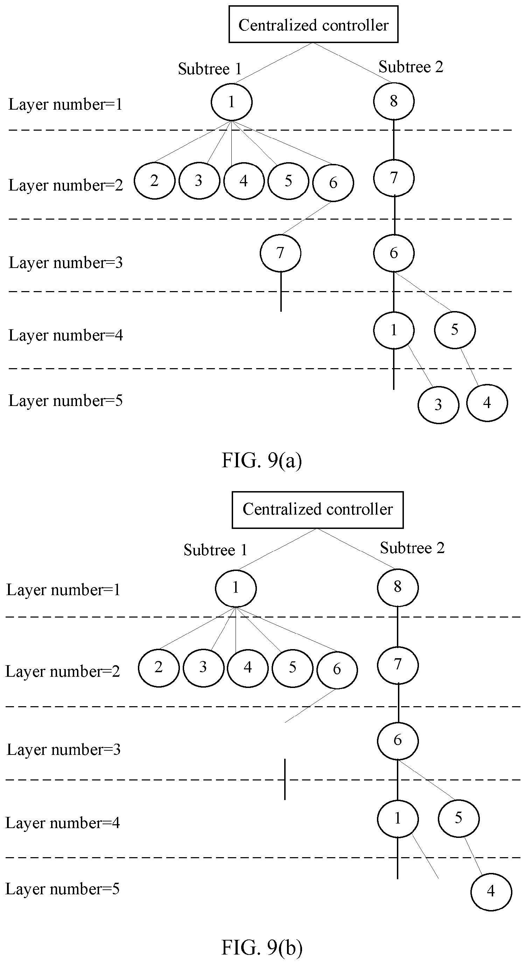

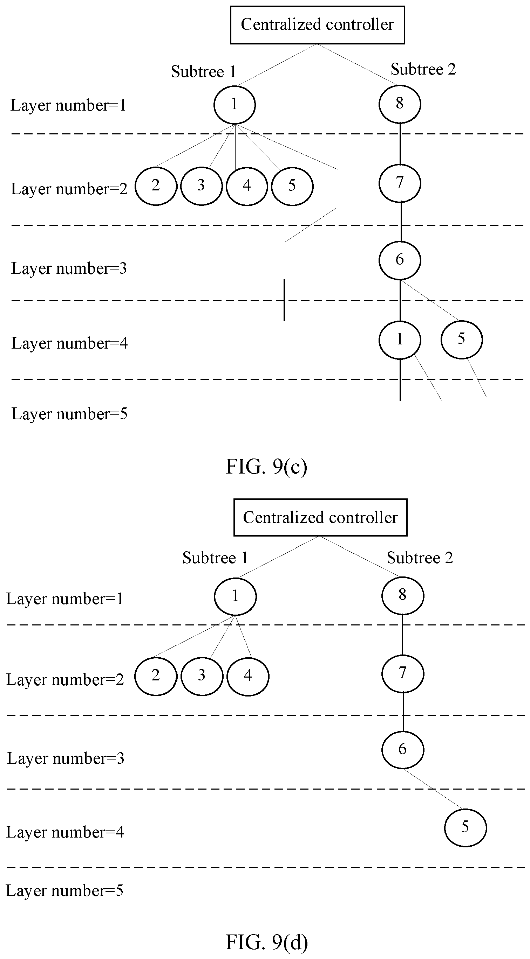

According to the foregoing steps, for a process of generating two balanced single-homed subtrees by using two initial single-homed subtrees, reference may be made to FIG. 9(a) to FIG. 9(d). Specifically:
the first time and the second time step 603 to step 613 are performed, the node 2 in the subtree 2 and the node 8 in the subtree 1 are removed, and a removal result is shown in FIG. 9(a);
the third time and the fourth time step 603 to step 613 are performed, the node 3 in the subtree 2 and a node 7 in the subtree 1 are removed, and a removal result is shown in FIG. 9(b);
the fifth time and the sixth time step 603 to step 613 are performed, the node 4 in the subtree 2 and a node 6 in the subtree 1 are removed, and a removal result is shown in FIG. 9(c); and
the seventh time and the eighth time step 603 to step 613 are performed, the node 1 in the subtree 2 and a node 5 in the subtree 1 are removed, and a removal result is shown in FIG. 9(d).

In a process of performing step 603 to step 613 at the ninth time, step 615 is directly performed after step 609 is performed, which indicates that the removal result shown in FIG. 9(d) is that two balanced single-homed subtrees are obtained.

For a method for calculating a tree sending time of each balanced single-homed subtree, reference may be made to Embodiment 2, and details are not described herein again. It can be learned by means of calculation that tree sending times of the two balanced single-homed subtrees are both four unit times; therefore, a total time for sending cross-connection commands is four unit times.

### Embodiment 2

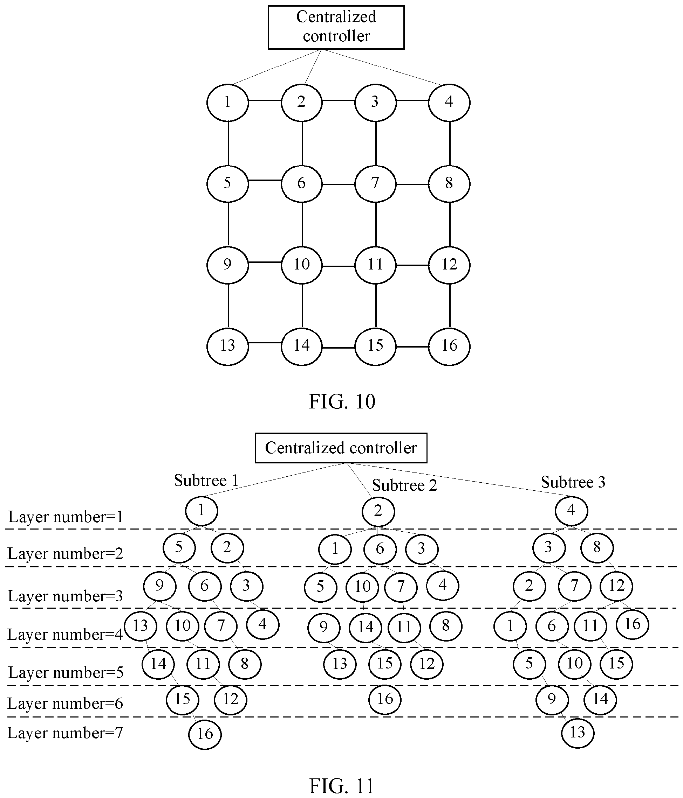

Refer to FIG. 10, which is a schematic diagram of a multi-homed access scenario according to this embodiment of the present invention. The scenario includes a centralized controller and 16 nodes. The 16 nodes are separately represented as: a node 1, a node 2, a node 3..., and a node 16. The centralized controller is connected to the node 1, the node 2, a node 4, and a network, that is, the node 1, the node 2, and the node 4 are access nodes.

Refer to FIG. 11, which is a schematic diagram of three initial single-homed subtrees that are obtained after step 601 and step 602 are performed, where the three initial single-homed subtrees include a subtree 1, a subtree 2, and a subtree 3.

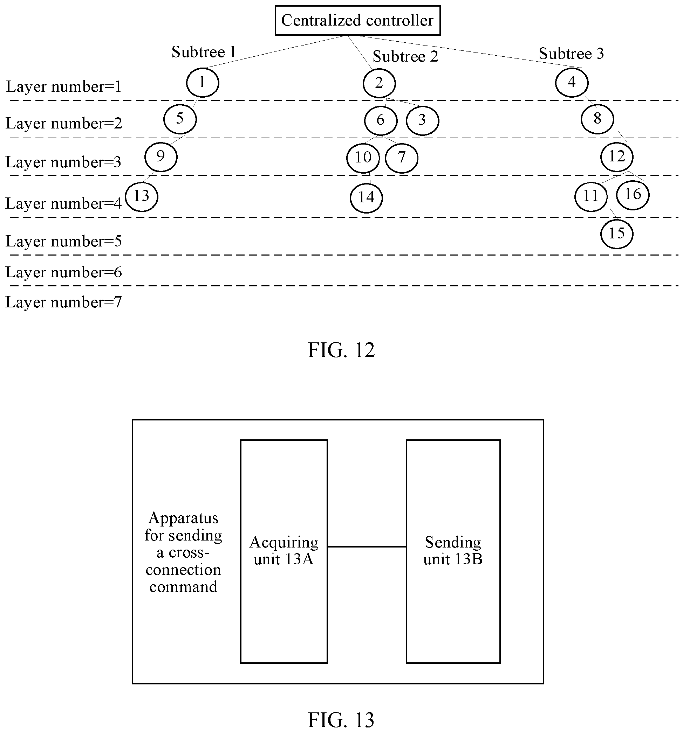

A process of generating three balanced single-homed subtrees by using the three initial single-homed subtrees includes: sequentially removing a node 16 in the subtree 1, a node 13 in the subtree 3, a node 16 in the subtree 2, a node 12 in the subtree 1, a node 9 in the subtree 3, a node 12 in the subtree 2, a node 15 in the subtree 1, a node 14 in the subtree 3, a node 13 in the subtree 2, a node 8 in the subtree 1, a node 5 in the subtree 3, a node 15 in the subtree 2, a node 14 in the subtree 1, a node 10 in the subtree 3, a node 8 in the subtree 2, a node 11 in the subtree 1, a node 9 in the subtree 3, a node 1 in the subtree 2, a node 4 in the subtree 1, a node 11 in the subtree 3, a node 6 in the subtree 2, a node 10 in the subtree 1, a node 2 in the subtree 3, a node 4 in the subtree 2, a node 7 in the subtree 1, a node 5 in the subtree 3, a node 7 in the subtree 2, a node 6 in the subtree 1, a node 1 in the subtree 3, a node 3 in the subtree 2, a node 3 in the subtree 1, and a node 2 in the subtree 1. The finally obtained three balanced single-homed subtrees are a subtree 1, a subtree 2, and a subtree 3 that are shown in FIG. 12.

For a method for calculating a tree sending time of each balanced single-homed subtree, reference may be made to Embodiment 2, and details are not described herein again. It can be learned by means of calculation that a tree sending time of the subtree 1 is four unit times, a tree sending time of the subtree 2 is six unit times, and a tree sending time of the subtree 3 is six unit times; therefore, a total time for sending cross-connection commands is six unit times.

### Embodiment 4

Refer to FIG. 13, which shows an apparatus for sending a cross-connection command according to this embodiment of the present invention, and the apparatus is applied to a centralized controller and used to perform the method for sending a cross-connection command shown in FIG. 2, where a network includes p nodes; the centralized controller is connected to the network by using k access nodes of the p nodes, where p≥k≥2, and both k and p are integers; and the apparatus includes:
an acquiring unit 13A, configured to acquire, based on a network topology and the k access nodes, k balanced single-homed subtrees, where the k balanced single-homed subtrees include the p nodes, nodes in any two of the balanced single-homed subtrees have no intersection, and quantities of nodes in the k balanced single-homed subtrees are balanced; and
a sending unit 13B, configured to concurrently send cross-connection commands to the nodes in the k balanced single-homed subtrees in a descending order of layer numbers of layers at which nodes in each of the balanced single-homed subtrees are located.

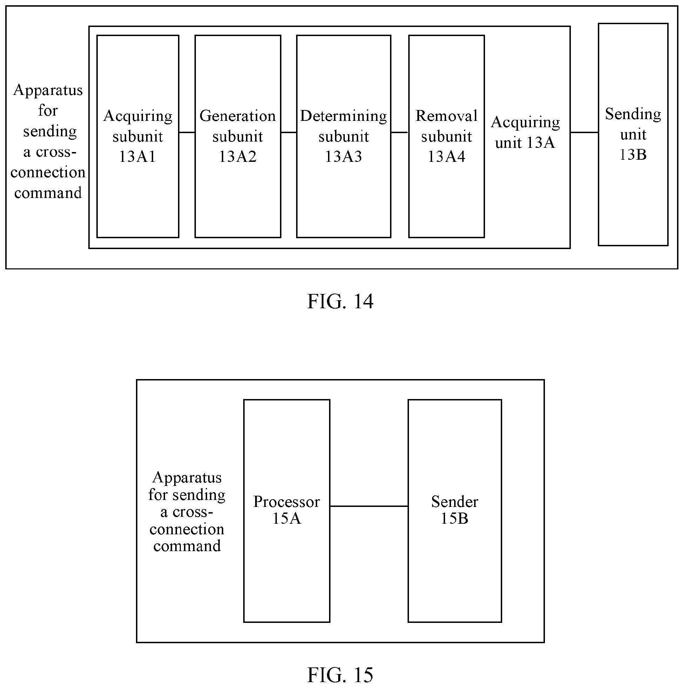

Optionally, referring to FIG. 14, the acquiring unit 13A includes:
an acquiring subunit 13A1, configured to remove, for each of the access nodes, k-1 links between the centralized controller and k-1 access nodes except the access node, to obtain k different single-homed network topologies;
a generation subunit 13A2, configured to generate, based on the k single-homed network topologies, k initial single-homed subtrees, where the k initial single-homed subtrees are k minimum spanning trees that use the centralized controller as a root node;
a determining subunit 13A3, configured to determine p×(k-1) operational nodes in the k initial single-homed subtrees; and
a removal subunit 13A4, configured to remove the p×(k-1) operational nodes, to obtain the k balanced single-homed subtrees.

Optionally, the determining subunit 13A3 is specifically configured to determine an execution object on which a current removal operation is executed, and instruct the removal subunit 13A4 to remove the execution object, where the execution object is one of the p×(k-1) operational node; where
the determining subunit 13A3 is specifically configured to:
determine, in k current single-homed subtrees, a subtree on which the current removal operation is executed, where the current single-homed subtree refers to a subtree in a current network topology, the current network topology refers to a network topology obtained after a previous removal operation is executed, and the subtree on which the current removal operation is executed includes a node that exists in other k-1 current single-homed subtrees; and
use one node, existing in the other k-1 current single-homed subtrees, in the subtree on which the current removal operation is executed as the execution object.

Optionally, the determining subunit 13A3 is specifically configured to:
determine first-type subtrees in the k current single-homed subtrees, where the first-type subtree is a current single-homed subtree that includes a node in the other k-1 current single-homed subtrees; and
when there is one current single-homed subtree whose quantity of nodes is the greatest in the first-type subtrees, use the current single-homed subtree whose quantity of nodes is the greatest in the first-type subtrees as the subtree on which the current removal operation is executed; or
when there are at least two current single-homed subtrees whose quantities of nodes are the greatest in the first-type subtrees, use a current single-homed subtree whose quantity of nodes is the greatest and whose quantity of layers is the greatest in the first-type subtrees as the subtree on which the current removal operation is executed.

Optionally, the determining subunit 13A3 is specifically configured to: when there are at least two nodes, existing in the other k-1 current single-homed subtrees, in the subtree on which the current removal operation is executed, use a node that is located at a layer whose layer number is the smallest in the at least two nodes as the execution object.

According to the apparatus for sending a cross-connection command provided in this embodiment of the present invention, k balanced single-homed subtrees are acquired based on a network topology and k access nodes, where k≥2; and cross-connection commands are concurrently sent to nodes in the k balanced single-homed subtrees in a descending order of layer numbers of layers at which nodes in each of the balanced single-homed subtrees are located. A fixed order (which, in each process, is a descending order of layer numbers of layers at which nodes in a balanced single-homed subtree that corresponds to the process are located) in which cross-connection commands are sent is provided in this solution; therefore, a total time for sending the cross-connection commands can be automatically controlled. In addition, in this solution, splitting of a network into k balanced single-homed subtrees by a centralized controller, a concurrent sending manner, and a setting of the fixed order enable the total time for sending the cross-connection commands to be minimized. Therefore, a problem in the prior art that a total time for sending cross-connection commands is uncontrollable due to a random order, and the total time cannot be minimized is resolved.

### Embodiment 5

Refer to FIG. 15, which shows an apparatus for sending a cross-connection command according to this embodiment of the present invention, and the apparatus is applied to a centralized controller and used to perform the method for sending a cross-connection command shown in FIG. 2, where a network includes p nodes; the centralized controller is connected to the network by using k access nodes of the p nodes, where p≥k≥2, and both k and p are integers; and the apparatus includes:
a processor 15A, configured to acquire, based on a network topology and the k access nodes, k balanced single-homed subtrees, where the k balanced single-homed subtrees include the p nodes, nodes in any two of the balanced single-homed subtrees have no intersection, and quantities of nodes in the k balanced single-homed subtrees are balanced; and
a sender 15B, configured to concurrently send cross-connection commands to the nodes in the k balanced single-homed subtrees in a descending order of layer numbers of layers at which nodes in each of the balanced single-homed subtrees are located.

Optionally, the processor 15A is specifically configured to:
remove, for each of the access nodes, k-1 links between the centralized controller and k-1 access nodes except the access node, to obtain k different single-homed network topologies;
generate, based on the k single-homed network topologies, k initial single-homed subtrees, where the k initial single-homed subtrees are k minimum spanning trees that use the centralized controller as a root node;
determine p×(k-1) operational nodes in the k initial single-homed subtrees; and
remove the p×(k-1) operational nodes, to obtain the k balanced single-homed subtrees.

Optionally, the processor 15A is specifically configured to determine an execution object on which a current removal operation is executed, and remove the execution object, where the execution object is one of the p×(k-1) operational nodes; where
the processor 15A is specifically configured to:
determine, in k current single-homed subtrees, a subtree on which the current removal operation is executed, where the current single-homed subtree refers to a subtree in a current network topology, the current network topology refers to a network topology obtained after a previous removal operation is executed, and the subtree on which the current removal operation is executed includes a node that exists in other k-1 current single-homed subtrees; and
use one node, existing in the other k-1 current single-homed subtrees, in the subtree on which the current removal operation is executed as the execution object.

Optionally, the processor 15A is specifically configured to:
determine first-type subtrees in the k current single-homed subtrees, where the first-type subtree is a current single-homed subtree that includes a node in the other k-1 current single-homed subtrees; and
when there is one current single-homed subtree whose quantity of nodes is the greatest in the first-type subtrees, use the current single-homed subtree whose quantity of nodes is the greatest in the first-type subtrees as the subtree on which the current removal operation is executed; or
when there are at least two current single-homed subtrees whose quantities of nodes are the greatest in the first-type subtrees, use a current single-homed subtree whose quantity of nodes is the greatest and whose quantity of layers is the greatest in the first-type subtrees as the subtree on which the current removal operation is executed.

Optionally, the processor 15A is specifically configured to: when there are at least two nodes, existing in the other k-1 current single-homed subtrees, in the subtree on which the current removal operation is executed, use a node that is located at a layer whose layer number is the smallest in the at least two nodes as the execution object.

According to the apparatus for sending a cross-connection command provided in this embodiment of the present invention, k balanced single-homed subtrees are acquired based on a network topology and k access nodes, where k≥2; and cross-connection commands are concurrently sent to nodes in the k balanced single-homed subtrees in a descending order of layer numbers of layers at which nodes in each of the balanced single-homed subtrees are located. A fixed order (which, in each process, is a descending order of layer numbers of layers at which nodes in a balanced single-homed subtree that corresponds to the process are located) in which cross-connection commands are sent is provided in this solution; therefore, a total time for sending the cross-connection commands can be automatically controlled. In addition, in this solution, splitting of a network into k balanced single-homed subtrees by a centralized controller, a concurrent sending manner, and a setting of the fixed order enable the total time for sending the cross-connection commands to be minimized. Therefore, a problem in the prior art that a total time for sending cross-connection commands is uncontrollable due to a random order, and the total time cannot be minimized is resolved.

### Embodiment 6

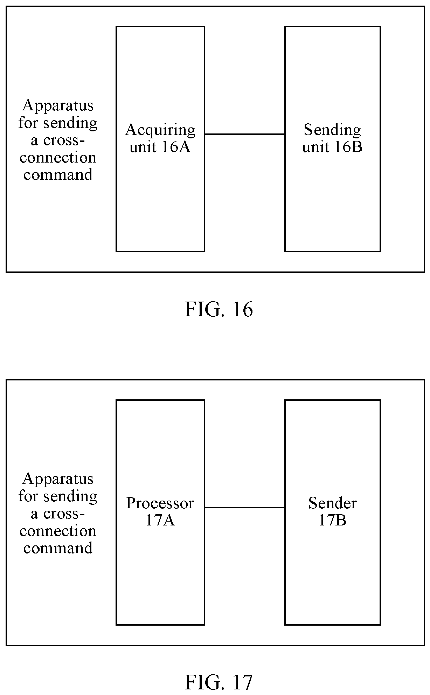

Refer to FIG. 16, which shows an apparatus for sending a cross-connection command according to this embodiment of the present invention, and the apparatus is applied to a centralized controller and used to perform the method for sending a cross-connection command shown in FIG. 3, where a network includes p nodes; the centralized controller is connected to the network by using one access node of the p nodes, where p is an integer greater than or equal to 1; and the apparatus includes:
an acquiring unit 16A, configured to generate, based on a network topology and the access node, a minimum spanning tree that uses the centralized controller as a root node; and
a sending unit 16B, configured to send cross-connection commands to nodes in the minimum spanning tree in a descending order of layer numbers of layers at which the nodes in the minimum spanning tree are located.

According to the apparatus for sending a cross-connection command provided in this embodiment of the present invention, a minimum spanning tree that uses a centralized controller as a root node is generated based on a network topology; and cross-connection commands are sent to nodes in the minimum spanning tree in a descending order of layer numbers of layers at which the nodes in the minimum spanning tree are located. A fixed order (where the cross-connection commands are sent to the nodes in the minimum spanning tree in the descending order of the layer numbers of the layers at which the nodes in the minimum spanning tree are located) in which cross-connection commands are sent is provided in this solution; therefore, a total time for sending the cross-connection commands can be automatically controlled. In addition, generating, based on the network topology, the minimum spanning tree that uses the centralized controller as a root node, and a setting of the fixed order enable the total time for sending the cross-connection commands to be minimized. Therefore, a problem in the prior art that a total time for sending cross-connection commands is uncontrollable due to a random order, and the total time cannot be minimized is resolved.

### Embodiment 7

Refer to FIG. 17, which shows an apparatus for sending a cross-connection command according to this embodiment of the present invention, and the apparatus is applied to a centralized controller and used to perform the method for sending a cross-connection command shown in FIG. 3, where a network includes p nodes; the centralized controller is connected to the network by using one access node of the p nodes, where p is an integer greater than or equal to 1; and the apparatus includes:
a processor 17A, configured to generate, based on a network topology and the access node, a minimum spanning tree that uses the centralized controller as a root node; and
a sender 17B, configured to send cross-connection commands to nodes in the minimum spanning tree in a descending order of layer numbers of layers at which the nodes in the minimum spanning tree are located.

According to the apparatus for sending a cross-connection command provided in this embodiment of the present invention, a minimum spanning tree that uses a centralized controller as a root node is generated based on a network topology; and cross-connection commands are sent to nodes in the minimum spanning tree in a descending order of layer numbers of layers at which the nodes in the minimum spanning tree are located. A fixed order (where the cross-connection commands are sent to the nodes in the minimum spanning tree in the descending order of the layer numbers of the layers at which the nodes in the minimum spanning tree are located) in which cross-connection commands are sent is provided in this solution; therefore, a total time for sending the cross-connection commands can be automatically controlled. In addition, generating, based on the network topology, the minimum spanning tree that uses the centralized controller as a root node, and a setting of the fixed order enable the total time for sending the cross-connection commands to be minimized. Therefore, a problem in the prior art that a total time for sending cross-connection commands is uncontrollable due to a random order, and the total time cannot be minimized is resolved.

It may be clearly understood by persons skilled in the art that, for the purpose of convenient and brief description, for a detailed working process of the foregoing system, apparatus, and unit, refer to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the foregoing integrated unit is implemented in a form of a software functional unit, the integrated unit may be stored in a computer-readable storage medium. The software functional unit is stored in a storage medium and includes several instructions for instructing a computer device (which may be a personal computer, a server, or a network device) to perform some of the steps of the methods described in the embodiments of the present invention. The foregoing storage medium includes: any medium that can store program code, such as a USB flash drive, a removable hard disk, a read-only memory (ROM), a random access memory (RAM), a magnetic disc, or an optical disc.

Finally, it should be noted that the foregoing embodiments are merely intended for describing the technical solutions of the present invention other than limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of the embodiments of the present invention.

## Claims

1. A method for sending a cross-connection command, applied to a centralized controller, wherein a network comprises p nodes; the centralized controller is connected to the network by using k access nodes of the p nodes, wherein p≥k≥2, and both k and p are integers such that the centralized controller is connected to the network by using at least two access nodes; and the method comprises:
removing, for each of the access nodes, k-1 links between the centralized controller and k-1 access nodes except the access node, to obtain k different single-homed network topologies;
generating, based on the k single-homed network topologies, k initial single-homed subtrees, wherein each of the k initial single-homed subtrees is a minimum spanning tree that uses the centralized controller as a root node and is connected to the centralized controller through one access node; (para 80, 52)
generating (201), by using the k initial single-homed subtrees, k balanced single-homed subtrees, wherein the k balanced single-homed subtrees comprise the p nodes, nodes in any two of the balanced single-homed subtrees have no intersection, quantities of nodes in the k balanced single-homed subtrees are balanced;
wherein the nodes in any two of the balanced single-homed subtrees have no intersection if a node of the p nodes is in a balanced single-homed subtree, the node does not exist in the remaining k-1 balanced single-homed subtrees; and
wherein the quantities of nodes in the k balanced single-homed subtrees are balanced if a difference between the quantities of the nodes in any two of the single-homed subtrees≤k - 1; and
concurrently sending (202) cross-connection commands to the nodes in the k balanced single-homed subtrees in a descending order of layer numbers of layers at which nodes in each of the balanced single-homed subtrees are located, wherein each layer contains nodes with same hop count distance from the centralized controller and a layer number of the layer is the hop count distance of the one or more nodes located at the layer;
wherein the acquiring k balanced single-homed subtrees comprises:
determining p×(k-1) operational nodes in the k initial single-homed subtrees; and
removing the p×(k-1) operational nodes, to obtain the k balanced single-homed subtrees;

2. The method according to claim 1, wherein the determining p×(k-1) operational nodes in the k initial single-homed subtrees; and removing the p×(k-1) operational nodes, to obtain the k balanced single-homed subtrees comprises:
determining an execution object on which a current removal operation is executed, and removing the execution object, wherein the execution object is one of the p×(k-1) operational nodes, and
the determining an execution object on which a current removal operation is executed comprises:
determining, in k current single-homed subtrees, a subtree on which the current removal operation is executed, wherein the current single-homed subtree refers to a subtree in a current network topology, the current network topology refers to a network topology obtained after a previous removal operation is executed, and the subtree on which the current removal operation is executed comprises a node that exists in other k-1 current single-homed subtrees; and
using one node, existing in the other k-1 current single-homed subtrees, in the subtree on which the current removal operation is executed as the execution object.

3. The method according to claim 2, wherein the determining, in k current single-homed subtrees, a subtree on which the current removal operation is executed comprises:
determining first-type subtrees in the k current single-homed subtrees, wherein the first-type subtree is a current single-homed subtree that comprises a node in the other k-1 current single-homed subtrees; and
when there is one current single-homed subtree whose quantity of nodes is the greatest in the first-type subtrees, using the current single-homed subtree whose quantity of nodes is the greatest in the first-type subtrees as the subtree on which the current removal operation is executed; or
when there are at least two current single-homed subtrees whose quantities of nodes are the greatest in the first-type subtrees, using a current single-homed subtree whose quantity of nodes is the greatest and whose quantity of layers is the greatest in the first-type subtrees as the subtree on which the current removal operation is executed.

4. The method according to claim 2 or 3, wherein the using one node, existing in the other k-1 current single-homed subtrees, in the subtree on which the current removal operation is executed as the execution object comprises:
when there are at least two nodes, existing in the other k-1 current single-homed subtrees, in the subtree on which the current removal operation is executed, using a node that is located at a layer whose layer number is the smallest in the at least two nodes as the execution object.

5. An apparatus for sending a cross-connection command, applied to a centralized controller, wherein a network comprises p nodes; the centralized controller is connected to the network by using k access nodes of the p nodes, wherein p≥k≥2, and both k and p are integers, such that the centralized controller is connected to the network by using at least two access nodes; and the apparatus comprises:
an acquiring unit (13A) comprising:
an acquiring subunit (13A1), configured to remove, for each of the access nodes, k-1 links between the centralized controller and k-1 access nodes except the access node, to obtain k different single-homed network topologies; and
a generation subunit (13A2), configured to generate, based on the k single-homed network topologies, k initial single-homed subtrees, wherein each of the k initial single-homed subtrees is a minimum spanning tree that uses the centralized controller as a root node; and
the acquiring unit (13A) further configured to generate, by using k initial single-homed subtrees, k balanced single-homed subtrees, wherein the k balanced single-homed subtrees comprise the p nodes, nodes in any two of the balanced single-homed subtrees have no intersection, and quantities of nodes in the k balanced single-homed subtrees are balanced;
and is connected to the centralized controller through one access node; wherein the nodes in any two of the balanced single-homed subtrees have no intersection if a node of the p nodes is in a balanced single-homed subtree, the node does not exist in the remaining k-1 balanced single-homed subtrees; and
wherein the quantities of nodes in the k balanced single-homed subtrees are balanced if a difference between the quantities of the nodes in any two of the single-homed subtrees≤k - 1; and
a sending unit (13B), configured to concurrently send cross-connection commands to the nodes in the k balanced single-homed subtrees in a descending order of layer numbers of layers at which nodes in each of the balanced single-homed subtrees are located;
wherein the acquiring unit (13A) further comprises:
a determining subunit (13A3), configured to determine p×(k-1) operational nodes in the k initial single-homed subtrees; and
a removal subunit (13A4), configured to remove the p×(k-1) operational nodes, to obtain the k balanced single-homed subtrees.

6. The apparatus according to claim 5, wherein
the determining subunit is specifically configured to determine an execution object on which a current removal operation is executed, and instruct the removal subunit to remove the execution object, wherein the execution object is one of the p×(k-1) operational nodes; wherein
the determining subunit is specifically configured to:
determine, in k current single-homed subtrees, a subtree on which the current removal operation is executed, wherein the current single-homed subtree refers to a subtree in a current network topology, the current network topology refers to a network topology obtained after a previous removal operation is executed, and the subtree on which the current removal operation is executed comprises a node that exists in other k-1 current single-homed subtrees; and
use one node, existing in the other k-1 current single-homed subtrees, in the subtree on which the current removal operation is executed as the execution object.

7. The apparatus according to claim 6, wherein the determining subunit is specifically configured to:
determine first-type subtrees in the k current single-homed subtrees, wherein the first-type subtree is a current single-homed subtree that comprises a node in the other k-1 current single-homed subtrees; and
when there is one current single-homed subtree whose quantity of nodes is the greatest in the first-type subtrees, use the current single-homed subtree whose quantity of nodes is the greatest in the first-type subtrees as the subtree on which the current removal operation is executed; or
when there are at least two current single-homed subtrees whose quantities of nodes are the greatest in the first-type subtrees, use a current single-homed subtree whose quantity of nodes is the greatest and whose quantity of layers is the greatest in the first-type subtrees as the subtree on which the current removal operation is executed.

8. The apparatus according to claim 6 or 7, wherein
the determining subunit is specifically configured to: when there are at least two nodes, existing in the other k-1 current single-homed subtrees, in the subtree on which the current removal operation is executed, use a node that is located at a layer whose layer number is the smallest in the at least two nodes as the execution object.

## Patentansprüche

1. Verfahren zum Senden eines Querverbindungsbefehls, der bei einer zentralisierten Steuerung angewendet wird, wobei ein Netzwerk p Knoten umfasst; die zentralisierte Steuerung mit dem Netzwerk unter Verwendung von k Zugangsknoten der p Knoten verbunden ist, wobei p≥k≥2, und sowohl k als auch p ganze Zahlen sind, so dass die zentralisierte Steuerung mit dem Netzwerk unter Verwendung von mindestens zwei Zugangsknoten verbunden ist; und das Verfahren Folgendes umfasst:
Entfernen, für jeden der Zugangsknoten, von k-1 Verbindungen zwischen der zentralisierten Steuerung und k-1 Zugangsknoten außer dem Zugangsknoten, um k unterschiedliche "Single-Homed"-Netzwerktopologien zu erhalten;
Erzeugen, basierend auf den k "Single-Homed"-Netzwerktopologien, von k anfänglichen "Single-Homed"-Unterbäumen, wobei jeder der k anfänglichen "Single-Homed"-Unterbäume ein Baum der minimalen Spannen ist, der die zentralisierte Steuerung als einen Root-Knoten verwendet und mit der zentralisierten Steuerung über einen Zugangsknoten verbunden ist; (Para 80, 52) Erzeugen (201), unter Verwendung der k anfänglichen "Single-Homed"-Unterbäume, von k ausgeglichenen "Single-Homed"-Unterbäumen, wobei die k ausgeglichenen "Single-Homed"-Unterbäume die p Knoten umfassen, Knoten in zwei beliebigen der ausgeglichenen "Single-Homed"-Unterbäume keinen Schnittpunkt aufweisen und Mengen von Knoten in den k ausgeglichenen "Single-Homed"-Unterbäumen ausgeglichen sind;
wobei die Knoten in zwei beliebigen der ausgeglichenen "Single-Homed"-Unterbäume keinen Schnittpunkt aufweisen, falls sich ein Knoten der p Knoten in einem ausgeglichenen "Single-Homed"-Unterbaum befindet, ist der Knoten nicht in den verbleibenden k-1 ausgeglichenen "Single-Homed"-Unterbäumen vorhanden; und
wobei die Mengen von Knoten in den k ausgeglichenen "Single-Homed"-Unterbäumen ausgeglichen sind, falls eine Differenz zwischen den Mengen der Knoten in zwei beliebigen der "Single-Homed"-Unterbäume ≤ k-1 ist; und
gleichzeitiges Senden (202) von Querverbindungsbefehlen zu den Knoten in den k ausgeglichenen "Single-Homed"-Unterbäumen in absteigender Reihenfolge von Schichtnummern von Schichten, an denen sich Knoten in jedem der ausgeglichenen "Single-Homed"-Unterbäume befinden, wobei jede Schicht Knoten mit der gleichen Sprungzähldistanz von der zentralisierten Steuerung enthält und eine Schichtnummer der Schicht die Sprungzähldistanz des einen oder der mehreren Knoten ist, der bzw. die sich an der Schicht befinden;
wobei das Erfassen von k ausgeglichenen "Single-Homed"-Unterbäumen Folgendes umfasst:
Bestimmen von p×(k-1) Operationsknoten in den k anfänglichen "Single-Homed"-Unterbäumen und
Entfernen der p×(k-1) Operationsknoten, um die k ausgeglichenen "Single-Homed"-Unterbäume zu erhalten.

2. Verfahren nach Anspruch 1, wobei das Bestimmen von p×(k-1) Operationsknoten in den k anfänglichen "Single-Homed"-Unterbäumen und das Entfernen der p×(k-1) Operationsknoten, um die k ausgeglichenen "Single-Homed"-Unterbäume zu erhalten, Folgendes umfasst:
Bestimmen eines Ausführungsobjekts, an dem eine gegenwärtige Entfernungsoperation ausgeführt wird, und Entfernen des Ausführungsobjekts, wobei das Ausführungsobjekt einer der p×(k-1) Operationsknoten ist, und
das Bestimmen eines Ausführungsobjekts, an dem eine gegenwärtige Entfernungsoperation ausgeführt wird, Folgendes umfasst:
Bestimmen, in k gegenwärtigen "Single-Homed"-Unterbäumen, eines Unterbaums, an dem die gegenwärtige Entfernungsoperation ausgeführt wird, wobei sich der gegenwärtige "Single-Homed"-Unterbaum auf einen Unterbaum in einer gegenwärtigen Netzwerktopologie bezieht, sich die gegenwärtige Netzwerktopologie auf eine Netzwerktopologie bezieht, die erhalten wird, nachdem eine vorherige Entfernungsoperation ausgeführt wird, und der Unterbaum, an dem die gegenwärtige Entfernungsoperation ausgeführt wird, einen Knoten umfasst, der in anderen k-1 gegenwärtigen "Single-Homed"-Unterbäumen vorhanden ist; und
Verwenden eines Knotens, der in den anderen k-1 gegenwärtigen "Single-Homed"-Unterbäumen vorhanden ist, im Unterbaum, an dem die gegenwärtige Entfernungsoperation ausgeführt wird, als das Ausführungsobjekt.

3. Verfahren nach Anspruch 2, wobei das Bestimmen, in k gegenwärtigen "Single-Homed"-Unterbäumen, eines Unterbaums, an dem die gegenwärtige Entfernungsoperation ausgeführt wird, Folgendes umfasst:
Bestimmen von Unterbäumen erster Art in den k gegenwärtigen "Single-Homed"-Unterbäumen, wobei der Unterbaum erster Art ein gegenwärtiger "Single-Homed"-Unterbaum ist, der einen Knoten in den anderen k-1 gegenwärtigen "Single-Homed"-Unterbäumen umfasst; und,
wenn es einen gegenwärtigen "Single-Homed"-Unterbaum gibt, dessen Menge von Knoten die größte in den Unterbäumen erster Art ist, Verwenden des gegenwärtigen "Single-Homed"-Unterbaums, dessen Menge von Knoten die größte in den Unterbäumen erster Art ist, als den Unterbaum, an dem die gegenwärtige Entfernungsoperation ausgeführt wird; oder,
wenn es mindestens zwei gegenwärtige "Single-Homed"-Unterbäume gibt, deren Mengen von Knoten die größten in den Unterbäumen erster Art sind, Verwenden eines gegenwärtigen "Single-Homed"-Unterbaums, dessen Menge von Knoten die größte ist und dessen Menge von Schichten die größte in den Unterbäumen erster Art ist, als den Unterbaum, an dem die gegenwärtige Entfernungsoperation ausgeführt wird.

4. Verfahren nach Anspruch 2 oder 3, wobei das Verwenden eines Knotens, der in den anderen k-1 gegenwärtigen "Single-Homed"-Unterbäumen vorhanden ist, im Unterbaum, an dem die gegenwärtige Entfernungsoperation ausgeführt wird, als das Ausführungsobjekt Folgendes umfasst:
wenn es mindestens zwei Knoten, die in den anderen k-1 gegenwärtigen "Single-Homed"-Unterbäumen vorhanden sind, im Unterbaum gibt, an dem die gegenwärtige Entfernungsoperation ausgeführt wird, Verwenden eines Knotens, der sich an einer Schicht befindet, deren Schichtnummer die kleinste in den mindestens zwei Knoten ist, als das Ausführungsobjekt.

5. Vorrichtung zum Senden eines Querverbindungsbefehls, der bei einer zentralisierten Steuerung angewendet wird, wobei ein Netzwerk p Knoten umfasst; die zentralisierte Steuerung mit dem Netzwerk unter Verwendung von k Zugangsknoten der p Knoten verbunden ist, wobei p≥k≥2, und sowohl k als auch p ganze Zahlen sind, so dass die zentralisierte Steuerung mit dem Netzwerk unter Verwendung von mindestens zwei Zugangsknoten verbunden ist; und die Vorrichtung Folgendes umfasst:
eine Erfassungseinheit (13A), die Folgendes umfasst:
eine Erfassungsuntereinheit (13A1), die konfiguriert ist zum Entfernen, für jeden der Zugangsknoten, von k-1 Verbindungen zwischen der zentralisierten Steuerung und k-1 Zugangsknoten außer dem Zugangsknoten, um k unterschiedliche "Single-Homed"-Netzwerktopologien zu erhalten; und
eine Erzeugungsuntereinheit (13A2), die konfiguriert ist zum Erzeugen, basierend auf den k "Single-Homed"-Netzwerktopologien, von k anfänglichen "Single-Homed"-Unterbäumen, wobei jeder der k anfänglichen "Single-Homed"-Unterbäume ein Baum der minimalen Spannen ist, der die zentralisierte Steuerung als einen Root-Knoten verwendet; und
die Erfassungseinheit (13A) ferner konfiguriert ist zum Erzeugen, unter Verwendung von k anfänglichen "Single-Homed"-Unterbäumen, von k ausgeglichenen "Single-Homed"-Unterbäumen, wobei die k ausgeglichenen "Single-Homed"-Unterbäume die p Knoten umfassen, Knoten in zwei beliebigen der ausgeglichenen "Single-Homed"-Unterbäume keinen Schnittpunkt aufweisen und Mengen von Knoten in den k ausgeglichenen "Single-Homed"-Unterbäumen ausgeglichen sind;
und mit der zentralisierten Steuerung über einen Zugangsknoten verbunden ist, wobei die Knoten in zwei beliebigen der ausgeglichenen "Single-Homed"-Unterbäume keinen Schnittpunkt aufweisen, falls sich ein Knoten der p Knoten in einem ausgeglichenen "Single-Homed"-Unterbaum befindet, ist der Knoten nicht in den verbleibenden k-1 ausgeglichenen "Single-Homed"-Unterbäumen vorhanden; und
wobei die Mengen von Knoten in den k ausgeglichenen "Single-Homed"-Unterbäumen ausgeglichen sind, falls eine Differenz zwischen den Mengen der Knoten in zwei beliebigen der "Single-Homed"-Unterbäume ≤ k-1 ist; und
eine Sendeeinheit (13B), die konfiguriert ist zum gleichzeitigen Senden von Querverbindungsbefehlen zu den Knoten in den k ausgeglichenen "Single-Homed"-Unterbäumen in absteigender Reihenfolge von Schichtnummern von Schichten, an denen sich Knoten in jedem der ausgeglichenen "Single-Homed"-Unterbäume befinden;
wobei die Erfassungseinheit (13A) ferner Folgendes umfasst:
eine Bestimmungsuntereinheit (13A3), die konfiguriert ist zum Bestimmen von p×(k-1) Operationsknoten in den k anfänglichen "Single-Homed"-Unterbäumen; und eine Entfernungsuntereinheit (13A4), die konfiguriert ist zum Entfernen der p×(k-1) Operationsknoten, um die k ausgeglichenen "Single-Homed"-Unterbäume zu erhalten.

6. Vorrichtung nach Anspruch 5, wobei
die Bestimmungsuntereinheit spezifisch konfiguriert ist zum Bestimmen eines Ausführungsobjekts, an dem eine gegenwärtige Entfernungsoperation ausgeführt wird, und zum Anweisen der Entfernungsuntereinheit, das Ausführungsobjekt zu entfernen, wobei das Ausführungsobjekt einer der p×(k-1) Operationsknoten ist; wobei
die Bestimmungsuntereinheit spezifisch zu Folgendem konfiguriert ist:
Bestimmen, in k gegenwärtigen "Single-Homed"-Unterbäumen, eines Unterbaums, an dem die gegenwärtige Entfernungsoperation ausgeführt wird, wobei sich der gegenwärtige "Single-Homed"-Unterbaum auf einen Unterbaum in einer gegenwärtigen Netzwerktopologie bezieht, sich die gegenwärtige Netzwerktopologie auf eine Netzwerktopologie bezieht, die erhalten wird, nachdem eine vorherige Entfernungsoperation ausgeführt wird, und der Unterbaum, an dem die gegenwärtige Entfernungsoperation ausgeführt wird, einen Knoten umfasst, der in anderen k-1 gegenwärtigen "Single-Homed"-Unterbäumen vorhanden ist; und
Verwenden eines Knotens, der in den anderen k-1 gegenwärtigen "Single-Homed"-Unterbäumen vorhanden ist, im Unterbaum, an dem die gegenwärtige Entfernungsoperation ausgeführt wird, als das Ausführungsobjekt.

7. Vorrichtung nach Anspruch 6, wobei die Bestimmungsuntereinheit spezifisch zu Folgendem konfiguriert ist:
Bestimmen von Unterbäumen erster Art in den k gegenwärtigen "Single-Homed"-Unterbäumen, wobei der Unterbaum erster Art ein gegenwärtiger "Single-Homed"-Unterbaum ist, der einen Knoten in den anderen k-1 gegenwärtigen "Single-Homed"-Unterbäumen umfasst; und,
wenn es einen gegenwärtigen "Single-Homed"-Unterbaum gibt, dessen Menge von Knoten die größte in den Unterbäumen erster Art ist, Verwenden des gegenwärtigen "Single-Homed"-Unterbaums, dessen Menge von Knoten die größte in den Unterbäumen erster Art ist, als den Unterbaum, an dem die gegenwärtige Entfernungsoperation ausgeführt wird; oder,
wenn es mindestens zwei gegenwärtige "Single-Homed"-Unterbäume gibt, deren Mengen von Knoten die größten in den Unterbäumen erster Art sind, Verwenden eines gegenwärtigen "Single-Homed"-Unterbaums, dessen Menge von Knoten die größte ist und dessen Menge von Schichten die größte in den Unterbäumen erster Art ist, als den Unterbaum, an dem die gegenwärtige Entfernungsoperation ausgeführt wird.

8. Vorrichtung nach Anspruch 6 oder 7, wobei
die Bestimmungsuntereinheit spezifisch, wenn es mindestens zwei Knoten, die in den anderen k-1 gegenwärtigen "Single-Homed"-Unterbäumen vorhanden sind, im Unterbaum gibt, an dem die gegenwärtige Entfernungsoperation ausgeführt wird, konfiguriert ist zum Verwenden eines Knotens, der sich an einer Schicht befindet, dessen Schichtnummer die kleinste in den mindestens zwei Knoten ist, als das Ausführungsobj ekt.

## Revendications

1. Procédé pour envoyer une commande de connexion croisée, appliqué à un contrôleur centralisé, dans lequel un réseau comprend p noeuds ; le contrôleur centralisé est connecté au réseau au moyen de k noeuds d'accès des p noeuds, où p ≥ k ≥ 2, et k et p sont tous deux des entiers, de telle sorte que le contrôleur centralisé soit connecté au réseau en utilisant au moins deux noeuds d'accès ; et le procédé comprend les étapes suivantes :
retirer, pour chacun des noeuds d'accès, k-1 liaisons entre le contrôleur centralisé et k-1 noeuds d'accès à l'exception du noeud d'accès, pour obtenir k différentes topologies de réseau à rattachement unique ;
générer, sur la base des k topologies de réseau à rattachement unique, k sous-arbres à rattachement unique initiaux, où chacun des k sous-arbres à rattachement unique initiaux est un arbre de portée minimale qui utilise le contrôleur centralisé comme noeud racine et est connecté au contrôleur centralisé par l'intermédiaire d'un noeud d'accès ; (para 80, 52)
générer (201), en utilisant les k sous-arbres à rattachement unique initiaux, k sous-arbres à rattachement unique équilibrés, où les k sous-arbres à rattachement unique équilibrés comprennent les p noeuds, les noeuds dans n'importe lequel des deux sous-arbres à rattachement unique équilibrés n'ont pas d'intersection, les quantités de noeuds dans les k sous-arbres à rattachement unique équilibrés sont équilibrées ;
où les noeuds dans n'importe lesquels deux sous-arbres des sous-arbres à rattachement unique équilibrés n'ont pas d'intersection si un noeud des p noeuds se trouve dans un sous-arbre à rattachement unique équilibré, le noeud n'existe pas dans les k-1 sous-arbres à rattachement unique équilibrés restants ; et
où les quantités de noeuds dans les k sous-arbres à rattachement unique équilibrés sont équilibrés si une différence entre les quantités de noeuds dans n'importe lesquels deux sous-arbres des sous-arbres à rattachement unique est inférieure ou égale à k-1 ; et
envoyer simultanément (202) des commandes de connexion croisée aux noeuds dans les k sous-arbres à rattachement unique équilibrés dans un ordre décroissant de numéros de couches de couches au niveau desquelles des noeuds dans chacun des sous-arbres à rattachement unique équilibrés sont situés, où chaque couche contient des noeuds ayant la même distance en nombre de sauts par rapport au contrôleur centralisé et un numéro de couche de la couche est la distance en nombre de sauts des un ou plusieurs noeuds situés au niveau de la couche ;
où l'acquisition des k sous-arbres à rattachement unique équilibrés comprend les étapes suivantes :
déterminer px(k-1) noeuds opérationnels dans les k sous-arbres à rattachement unique initiaux ; et
retirer les px(k-1) noeuds opérationnels pour obtenir les k sous-arbres à rattachement unique équilibrés.

2. Procédé selon la revendication 1, dans lequel la détermination px(k-1) noeuds opérationnels dans les k sous-arbres à rattachement unique initiaux ; et le retrait des px(k-1) noeuds opérationnels pour obtenir les k sous-arbres à rattachement unique équilibrés comprennent les étapes suivantes :
déterminer un objet d'exécution sur lequel une opération de retrait courante est exécutée, et retirer l'objet d'exécution, où l'objet d'exécution est l'un des px(k-1) noeuds opérationnels, et
la détermination d'un objet d'exécution sur lequel une opération de retrait en cours est exécutée comprend les étapes suivantes :
déterminer, dans k sous-arbres à rattachement unique courants, un sous-arbre sur lequel l'opération de retrait courante est exécutée, le sous-arbre à rattachement unique courant se réfèrant à un sous-arbre dans une topologie de réseau courante, la topologie de réseau courante se réfèrant à une topologie de réseau obtenue après qu'une opération de retrait précédente a été exécutée, et le sous-arbre sur lequel l'opération de retrait courante est exécutée comprenant un noeud qui existe dans k-1 autres sous-arbres à rattachement unique courants ; et
utiliser un noeud, existant dans les k-1 autres sous-arbres à rattachement unique courants, dans le sous-arbre sur lequel l'opération de retrait en cours est exécutée comme objet d'exécution.

3. Procédé selon la revendication 2, dans lequel la détermination, dans k sous-arbres à rattachement unique courants, d'un sous-arbre sur lequel l'opération de retrait courante est exécutée comprend les étapes suivantes :
déterminer des sous-arbres de premier type dans les k sous-arbres à rattachement unique courants, le sous-arbre de premier type étant un sous-arbre à rattachement unique courant qui comprend un noeud dans les k-1 autres sous-arbres à rattachement unique courants ; et
lorsqu'il existe un sous-arbre à rattachement unique courant dont la quantité de noeuds est la plus grande dans les sous-arbres de premier type, utiliser le sous-arbre à rattachement unique courant dont la quantité de noeuds est la plus grande dans les sous-arbres de premier type comme sous-arbre sur lequel l'opération de retrait courante est exécutée ; ou
lorsqu'il y a au moins deux sous-arbres à rattachement unique courants dont les quantités de noeuds sont les plus grandes dans les sous-arbres de premier type, utiliser un sous-arbre à rattachement unique courant dont la quantité de noeuds est la plus grande et dont la quantité de couches est la plus grande dans les sous-arbres de premier type comme sous-arbre sur lequel l'opération de retrait courante est exécutée.

4. Procédé selon la revendication 2 ou la revendication 3, dans lequel l'utilisation d'un noeud, existant dans les k-1 autres sous-arbres à rattachement unique courants, dans le sous-arbre sur lequel l'opération de retrait courante est exécutée comme objet d'exécution comprend l'étape suivante :
lorsqu'il y a au moins deux noeuds, qui existent dans les k-1 autres sous-arbres à rattachement unique courants, dans le sous-arbre sur lequel l'opération de retrait courante est exécutée, utiliser un noeud qui est situé au niveau d'une couche dont le numéro de couche est le plus petit dans les au moins deux noeuds comme objet d'exécution.

5. Appareil pour envoyer une commande de connexion croisée, appliqué à un contrôleur centralisé, dans lequel un réseau comprend p noeuds ; le contrôleur centralisé est connecté au réseau au moyen de k noeuds d'accès des p noeuds, où p ≥ k ≥ 2, et k et p sont tous deux des entiers, de telle sorte que le contrôleur centralisé soit connecté au réseau en utilisant au moins deux noeuds d'accès ; et l'appareil comprend :
une unité d'acquisition (13A) comprenant :
une sous-unité d'acquisition (13A1), configurée pour retirer, pour chacun des noeuds d'accès, k-1 liaisons entre le contrôleur centralisé et k-1 noeuds d'accès à l'exception du noeud d'accès, pour obtenir k différentes topologies de réseau à rattachement unique ; et
une sous-unité de génération (13A2), configurée pour générer, sur la base des k topologies de réseau à rattachement unique, k sous-arbres à rattachement unique initiaux, où chacun des k sous-arbres à rattachement unique initiaux est un arbre de portée minimale qui utilise le contrôleur centralisé comme noeud racine ; et
l'unité d'acquisition (13A) étant en outre configurée pour générer, en utilisant les k sous-arbres à rattachement unique initiaux, k sous-arbres à rattachement unique équilibrés, où les k sous-arbres à rattachement unique équilibrés comprennent les p noeuds, les noeuds dans n'importe lesquels deux sous-arbres des sous-arbres à rattachement unique équilibrés n'ont pas d'intersection, et les quantités de noeuds dans les k sous-arbres à rattachement unique équilibrés sont équilibrées ;
et est connectée au contrôleur centralisé par l'intermédiaire d'un noeud d'accès ; dans lequel les noeuds dans n'importe lesquels deux sous-arbres des sous-arbres à rattachement unique équilibrés n'ont pas d'intersection si un noeud des p noeuds se trouve dans un sous-arbre à rattachement unique équilibré, le noeud n'existe pas dans les k-1 sous-arbres à rattachement unique équilibrés restants ; et
dans lequel les quantités de noeuds dans les k sous-arbres à rattachement unique équilibrées sont équilibrés si une différence entre les quantités de noeuds dans n'importe lesquels deux sous-arbres des sous-arbres à rattachement unique est inférieure ou égale à k-1 ; et
une unité d'envoi (13B), configurée pour envoyer simultanément des commandes de connexion croisée aux noeuds dans les k sous-arbres à rattachement unique équilibrés dans un ordre décroissant de numéros de couches de couches au niveau desquelles les noeuds dans chacun des sous-arbres à rattachement unique équilibrés sont situés ;
dans lequel l'unité d'acquisition (13A) comprend en outre :
une sous-unité de détermination (13A3), configurée pour déterminer px(k-1) noeuds opérationnels dans les k sous-arbres à rattachement unique initiaux ; et
une sous-unité de retrait (13A4), configurée pour retirer les px(k-1) noeuds opérationnels pour obtenir les k sous-arbres à rattachement unique équilibrés.

6. Appareil selon la revendication 5, dans lequel
la sous-unité de détermination est spécifiquement configurée pour déterminer un objet d'exécution sur lequel une opération de retrait courante est exécutée, et donner pour instruction à la sous-unité de retrait de retirer l'objet d'exécution, l'objet d'exécution étant l'un des px(k-1) noeuds opérationnels ; dans lequel la sous-unité de détermination est spécifiquement configurée pour :
déterminer, dans k sous-arbres à rattachement unique courants, un sous-arbre sur lequel l'opération de retrait courante est exécutée, où le sous-arbre à rattachement unique courant se réfère à un sous-arbre dans une topologie de réseau courante, la topologie de réseau courante se réfère à une topologie de réseau obtenue après qu'une opération de retrait précédente a été exécutée, et le sous-arbre sur lequel l'opération de retrait courante est exécutée comprend un noeud qui existe dans k-1 autres sous-arbres à rattachement unique courants ; et
utiliser un noeud, existant dans les k-1 autres sous-arbres à rattachement unique courants, dans le sous-arbre sur lequel l'opération de retrait courante est exécutée comme objet d'exécution.

7. Appareil selon la revendication 6, dans lequel la sous-unité de détermination est spécifiquement configurée pour :
déterminer des sous-arbres de premier type dans les k sous-arbres à rattachement unique courants, où le sous-arbre de premier type est un sous-arbre à rattachement unique courant qui comprend un noeud dans les k-1 autres sous-arbres à rattachement unique courants ; et
lorsqu'il existe un sous-arbre à rattachement unique courant dont la quantité de noeuds est la plus grande dans les sous-arbres de premier type, utiliser le sous-arbre à rattachement unique courant dont la quantité de noeuds est la plus grande dans les sous-arbres de premier type comme sous-arbre sur lequel l'opération de retrait courante est exécutée ; ou
lorsqu'il y a au moins deux sous-arbres à rattachement unique courants dont les quantités de noeuds sont les plus grandes dans les sous-arbres de premier type, utiliser un sous-arbre à rattachement unique courant dont la quantité de noeuds est la plus grande et dont la quantité de couches est la plus grande dans les sous-arbres de premier type comme sous-arbre sur lequel l'opération de retrait courante est exécutée.

8. Appareil selon la revendication 6 ou la revendication 7, dans lequel
la sous-unité de détermination est spécifiquement configurée pour : lorsqu'il y a au moins deux noeuds, qui existent dans les k-1 autres sous-arbres à rattachement unique courants, dans le sous-arbre sur lequel l'opération de retrait courante est exécutée, utiliser un noeud qui est situé au niveau d'une couche dont le numéro de couche est le plus petit dans les au moins deux noeuds comme l'objet d'exécution.
